# EUROPEAN PATENT APPLICATION

(11) **EP 0 585 459 A1**
(43) Date of publication of application: **09.03.1994**
(21) Application number: 92907118.1
(22) Date of filing: 18.03.1992
(51) Int. Cl.: B32B 27/28, B32B 27/34

(54) **MULTILAYERED STRETCHED FILM**

(71) Applicant: SUMITOMO BAKELITE COMPANY LIMITED, Tokyo 100 (JP)
(72) Inventor: MATSUI, Ichiro 346, Sanjocho, Kyoto-shi Kyoto 604 (JP)
(74) Representative: Vossius, Volker, Dr.
(86) International application number: JP9200322
(87) International publication number: WO9318915

(57) **Abstract**

A multilayered stretched film comprising a polyamide resin layer (A), a saponified ethylene/vinyl acetate copolymer resin layer (B), the polyamide resin layer (A), and if necessary a modified polyolefin adhesive resin layer (C) and a heat-sealing resin layer (D) laminated in that order beginning with the outermost layer, wherein the polyamide resin layer (A) comprises a blend of 5 to 70 wt % of a noncrystalline polyamide and 95 to 30 wt % of a crystalline polyamide. If necessary, the modified polyolefin adhesive resin layer (C) may be interposed between the polyamide resin layer (A) and the saponified ethylene/vinyl acetate copolymer resin layer (B) in order to improve the adhesion between these two layers.

## Description

### TECHNICAL FIELD

The present invention relates to a multilayered stretched film excellent in anti-pinhole property, transparency, gas barrier property, heat sealability, and mechanical strength, which is used as a film for packaging (e.g., shrink packaging or pillow type packaging) of foods and other goods.

The present invention relates also to a multilayered stretched film excellent in transparency, mechanical strength, anti-pinhole property, gas barrier property, laminatability, and printability, which is used, for example, as a film for packaging of foods, sundries, etc. or a film as lid material for retort food container, deep drawing packaging, etc. by, for example, dry lamination or extrusion lamination with a resin or a film each made of low-density polyethylene, linear low-density polyethylene, polypropylene, ethylene-vinyl acetate copolymer, ionomer or the like.

### BACKGROUND ART

As a method for tight packaging of contents of various shapes such as foods, sundries, etc., there has been used a method which comprises conducting packaging with a shrink film of polyvinyl chloride, polyethylene, polypropylene or the like and then applying heat to the film for a short period of time to shrink it for its tight adhesion to the contents and improved appearance of the package.

Also in the packaging of foods, sundries, etc., their producers have pushed forward, in recent years, rationalization of production process from the standpoints of both manpower and equipment. In this connection, there has been used, as packaging machines, various bag-making/filling/packaging machines such as pillow type packaging machine and the like in order to achieve high speed or automated packaging. In such packaging machines, heat-sealable films such as those of OPP/PE are in general use. These films are required to have various properties such as mechanical strength, gas barrier property and the like, depending upon the contents used therein or the distribution method of the packages. Hence, it is considered to allow the films to have a laminated structure consisting of various layers of different functionas and having a number of functions as a whole.

In, for example, food industry, foods undergo, during the distribution period, various changes in shape, color, taste, fragrance, etc., caused by temperature, moisture, oxygen, light, etc. or by microorganisms such as bacteria, fungi and the like and easily give rise to quality deterioration, and therefore it has conventionally been conducted to add additives such as preservative, antioxidant and the like directly to foods as a measure for preventing the foods from being deteriorated to maintain their qualities until consumers take the foods. In recent years, however, regulation for food additives used in food processing industry, particularly cattle meat processing industry and fish meat processing industry, has become stricter. Consequently, the amount of additives used is decreasing or the use per se is being stopped. Hence, it has become necessary to develop, as a packaging material, a film having functions such as oxygen gas barrier property and the like so that the contents can secure long-term storability and freshness.

Conventional films used for food distribution have had, during transportation of foods, problems in mechanical strength, such as pinhole formation and the like depending upon the method of transportation.

For the above reasons, the films used in food distribution are required to have a structure of, for example, mechanical strength-imparting layer/barrier layer/sealant layer, and there have conventionally been used, for example, OPP/EVOH/PE and ONY/PVDC/EVA. In order to obtain these films by lamination, there are used dry lamination and extrusion lamination. In these methods, however, lamination must be carried out by each layer, and lamination of a larger number of layers has had drawbacks that a larger number of production steps and a higher cost are required. Further, since the minimum thickness of each film layer has a limitation, it is impossible to produce a multilayered film of very small thickness.

Meanwhile, food producers have pushed forward, in recent years, rationalization of production process from the standpoints of both manpower and equipment. In this connection, there have been used, as packaging machines, various bag-making/filling/packaging machines such as pillow type packaging machine and the like in order to achieve high speed or automated packaging. In such packaging machines, products flow at a high speed and the time for heat sealing is inevitably short, causing a problem of poor heat sealing. Hence, good heat sealability becomes an important property required for the packaging material used. However, polyethylene, etc. hitherto used as the sealing layer of a multilayered film have had a drawback of giving significantly reduced heat sealability after stretching. Further, viewed from a film's compatibility with a packaging machine, curls of the film reduce workability during film transfer, which causes, for example, poor matching of the sealing layer surface at the center sealing in pillow type packaging. Even if bag making is possible, the bag made is curled at the opening, which has caused a problem at the time of contents filling.

For biaxial stretching of a film, there are known successive biaxial stretching by tentering and simultaneous biaxial stretching. When these two methods are compared, the successive biaxial stretching employs an apparatus of simple structure and is superior to the simultaneous biaxial stretching also in productivity. However, in applying the successive biaxial stretching to an apliphatic polyamide resin represented by nylon 6 or nylon 6-6 which has conventionally been used, the crosswise stretching is very difficult because the intermolecular hydrogen bond of the resin is oriented toward the direction of the crosswise stretching in the course of the lengthwise stretching. For solving this problem, Japanese Patent Publication No. 29193/1976, etc. describe a method of blending an aliphatic polyamide with a polyamide having a metaxylylene group. The literature describes a single-layer film of the polyamides, and the film obtained by said method has insufficient transparency and has not satisfied the requirements for a packaging film.

A multilayered stretched film having a polyamide layer containing an amorphous nylon is described in Japanese Patent Application Kokai (Laid-open) No. 71749/1989. In this film, the amorphous nylon is used merely for improvement of barrier property, and the stretching is conducted by inflation (tubular method). While inflation is known as one method of simultaneous biaxial strength, it has been unsuitable for stretching of a film of complex constitution as in the present invention.

In order to eliminate these drawbacks, the present inventors made extensive study. As a result, by using, as the polyamide layer, a layer which is a blend of an amorphous polyamide and a crystalline polyamide, there could be obtained a multilayered stretched film which has good successive biaxial stretchability and which is excellent in anti-pinhole property, transparency, gas barrier property, heat sealability, mechanical strength, etc. The object of the present invention is to provide a multilayered stretched film excellent in successive biaxial stretchability as well as in transparency, mechanical strength, anti-pinhole property, gas barrier property, laminatability, printability, etc.

### DISCLOSURE OF THE INVENTION

The present invention provides:
(1) a multilayered stretched film wherein three layers are laminated in an order starting from an outermost layer, of a polyamide resin layer (A), a saponified ethylene-vinyl acetate copolymer resin layer (B) and the polyamide resin layer (A) and wherein the polyamide resin layer (A) consists of a blend of 5 - 70% by weight of an amorphous polyamide and 95 - 30% by weight of a crystalline polyamide,
(2) a multilayered stretched film wherein five layers are laminated in an order starting from an outermost layer, of a polyamide resin layer (A), a modified polyolefin adhesive resin layer (C), a saponified ethylene-vinyl acetate copolymer resin layer (B), the modified polyolefin adhesive resin layer (C) and the polyamide resin layer (A) and wherein the polyamide resin layer (A) consists of a blend of 5 - 70% by weight of an amorphous polyamide and 95 - 30% by weight of a crystalline polyamide, and
(3) a multilayered stretched film comprising a polyamide resin layer (A), a saponified ethylene-vinyl acetate copolymer resin layer (B), a modified polyolefin adhesive resin layer (C) and a heat-sealing resin layer (D), wherein the polyamide resin layer (A) consists of a blend of 5 - 70% by weight of an amorphous polyamide and 95-30% by weight of a crystalline polyamide, and wherein five or six layers are laminated in an order starting from an outermost layer, of A-B-A-C-D or A-C-B-A-C-D.
The present invention also provides:
any of the above films (1) to (3) which has been subjected to successive biaxial stretching at a stretching temperature of 50 - 150°C at a stretch ratio of 2-6 in one direction and of at least 5 in areal ratio, and
any of the above films (1) to (3) which has been subjected to successive biaxial stretching at a stretching temperature of 50 - 150°C at a stretch ratio of 2-6 in one direction and at least 5 in areal ratio and further to heat setting at a temperature 5 - 100°C higher than the stretching temperature.

The multilayered stretched film of the present invention is obtained by using a polyamide resin layer as a mechanical strength-imparting layer and a saponified ethylene-vinyl acetate copolymer resin layer as a gas barrier property imparting layer, further laminating, if necessary, a heat-sealing resin layer, and subjecting the resulting laminate to successive biaxial stretching, or by heat-setting the laminate after said stretching.

The polyamide resin layer (A) used in the present invention is a layer consisting of a blend of an amorphous polyamide and a crystalline polyamide. The amorphous polyamide is obtained by subjecting raw materials such as dicarboxylic acid, diamine, lactam, diisocyanate and the like to condensation polymerization under pressure and melting, decarboxylation-condensation reaction, etc. As the dicarboxylic acid, there are cited adipic acid, suberic acid, azelaic acid, terephthalic acid, isophthalic acid, etc. As the diamine, there are used hexamethylenediamine, trimethylhexamethylenediamine, isophoronediamine, bis-p-(aminocyclohexyl)methane, bis-p-(aminocyclohexyl)propane, etc. As the lactam, there are cited caprolactam, laurolactam, etc. As the diisocyanate, there are used diphenylmethane diisocyanate, tolylene diisocyanate, etc.

The crystalline polyamide blended with the amorphous polyamide is produced by, for example, polycondensation reaction of an ω-aminocarboxylic acid or polycondensation reaction of a dibasic acid and a diamine. There are used nylon 6, nylon 12, nylon 11, nylon 6-6, nylon 6-10, nylon 6-12, MXD 6 nylon (polycondensate of metaxylenediamine and adipic acid), copolymers thereof, blends thereof, etc.

When the amount of the amorphous polyamide is less than 5% by weight or exceeds 70% by weight, multi-layer stretching is difficult. Hence, the proportion of the amorphous polyamide blended with the crystalline polyamide must be 5 - 70% by weight.

The saponified ethylene-vinyl acetate copolymer resin layer (B) (the saponified ethylene-vinyl acetate copolymer resin is hereinafter abbreviated to EVOH) preferably has a melting point (DSC method) of 150°C or higher, an ethylene content of 26 - 75 mole % and a saponification degree (of vinyl acetate in the copolymer) of 90% or more.

As the modified polyolefin adhesive resin layer (C), there are used acid-modified olefin resins obtained by chemically bonding a monobasic unsaturated fatty acid (e.g., acrylic acid or methacrylic acid) or an anhydride of a dibasic unsaturated fatty acid (e.g., maleic acid, fumaric acid, or itaconic acid), i.e., maleic anhydride or the like to polyethylene, polypropylene, ethylene-propylene copolymer, copolymer of ethylene or propylene with an α-olefin, ethylene-vinyl acetate copolymer, ethylene-propylene elastomer or the like.

As the heat-sealing resin layer (D), there can be used polyolefin resins such as low-density polyethylene (LDPE), linear low-density polyethylene (LLDPE), medium-density polyethylene (MDPE), high-density polyethylene (HDPE), polypropylene (PP) and the like; and resins such as ethylene-vinyl acetate copolymer (EVA), ethylene-methyl methacrylate copolymer (EMMA), ethylene-ethyl acrylate copolymer (EEA), ethylene-methyl acrylate copolymer (EMA), ethylene-ethyl acrylate-maleic anhydride copolymer (E-EA-MAH), ethylene-acrylic acid copolymer (EAA), ethylene-methacrylic acid copolymer (EMAA) (these are all ethylene copolymers), ionomer (ION) and the like.

The total thickness of the multilayered stretched film of the present invention is 10-150 µm. A plastic film having a thickness of this range is suitable as a packaging film used in food packaging, etc.

The multilayered stretched film of the present invention has a laminated structure having multi-layers arranged in the order of A-B-A, A-C-B-C-A, A-B-A-C-D or A-C-B-A-C-D.

An appropriate amount of a suitable lubricant may be used in the polyamide resin layer (A) which becomes the outermost layer, the saponified ethylene-vinyl acetate copolymer resin layer (B) and the heat-sealing resin layer (D) which becomes the innermost layer, in order to increase the compatibility of the present film with a packaging machine. An anti-fogging agent, an anti-blocking agent, etc. may also be added depending upon the uses of the present film. Further, the present film may be subjected to corona treatment, etc. in order to enhance its printability and laminatability.

The multilayered stretched film of the present invention is most appropriately produced by conducting melt extrusion through a lamination die by co-extrusion using a plurality of extruders and then cooling and solidifying the extrudate. In the subsequent stretching, successive biaxial stretching by tentering is employed. The stretching temperature is appropriately 50 - 150°C and the stretch ratio is appropriately 2-6 in one direction and at least 5 in areal ratio. It is possible to conduct, after the stretching, heat-setting at a temperature 5 - 100°C higher than the stretching temperature to obtain a non-heat shrinkable multilayered biaxially stretched film.

The multilayered stretched film of the present invention is used, for example, as a film for pillow type packaging of foods, sundries, etc. and a film as lid material for retort food container, deep drawing packaging, etc. It is also used by laminating with a sealant film made of a resin such as low-density polyethylene, linear low-density polyethylene, ethylene-vinyl acetate copolymer, ionomer or the like.

### BEST MODE FOR CARRYING OUT THE INVENTION

### [Example 1]

Films each of 270 µm in thickness having a layer structure of PA/EVOH/PA (the thickness ratio of the respective layers = 35/30/35%) were prepared by T-die extrusion, i.e., melt extrusion through a multi-layer co-extrusion die. Each polyamide resin (hereinafter abbreviated to PA) used in the films had a different blending ratio of an amorphous nylon (hereinafter abbreviated to A-Ny) and 6 nylon (hereinafter abbreviated to 6-Ny), as shown in Table 1.

The resins used were as follows. With respect to PA, there were used, as A-Ny, SELAR PA 3426 manufactured by DuPont-Mitsui Polychemicals Co., Ltd. and, as the crystalline nylon to be blended with A-Ny, 1030B (which is 6-Ny) manufactured by Ube Industries, Ltd. As EVOH, there was used EVAL EP-F101 manufactured by KURARAY CO., LTD.

The multilayered films obtained above were subjected to successive biaxial stretching using a biaxial stretching tester manufactured by Toyo Seiki Seisaku-sho, Ltd. The stretching temperature was 80°C and the stretch ratio was 3 both lengthwise and crosswise. The biaxial stretchability of each film is shown in Table 1.

As shown in Run Nos. 1 and 2, in each of the film using PA consisting of A-Ny alone and the film using PA containing 80% of A-Ny, there occurred film breakage in the course of stretching because the load during stretching was large, and stretching under altered conditions was unable to give a good film, either. Also as shown in Run No. 6, in the film using PA consisting of 6-Ny alone, stretching flaws appeared during the crosswise stretching, making it impossible to obtain a good film. In contrast, in each of the films of Run Nos. 3-5 according to the present invention, stretching proceeded with no particular problem, making it possible to obtain a good film.

**Table 1**

| Run No. | Blending ratio of PA (%) | | Successive biaxial stretchability |
|---|---|---|---|
| | A-Ny | 6-Ny | |
| 1 | 100 | 0 | Bad |
| 2 | 80 | 20 | Bad |
| 3 | 60 | 40 | Good |
| 4 | 40 | 60 | Good |
| 5 | 20 | 80 | Good |
| 6 | 0 | 100 | Bad |

### [Example 2]

The same film as in Run No. 4 of Example 1 was used. It was treated using a successive biaxial stretcher and stretched at a stretching temperature of 80°C and a stretch ratio of 3.0 both lengthwise and crosswise, followed by heat setting at 150°C. The resulting multilayered biaxially stretched film had layer thicknesses of PA/EVOH/PA = 11/9/11 µm (total thickness = 31 µm).

One side of the film was subjected to corona treatment. Then, a pattern was printed thereon. On the resulting film was laminated a LLDPE film of 30 µm in thickness by dry lamination to prepare a film of 61 µm in thickness. With this film, an article of appropriate size was packed using a transverse pillow type packaging machine. The resulting package had very good appearance.

For comparison, it was tried to prepare a film having the same constitution as that of the Example 2 film by dry lamination using a single-layer stretched PA film and a single-layer stretched EVOH film. However, each material film had a very small thickness; the workability was bad; many flaws such as wrinkles and the like appeared; and no satisfactory film could be prepared.

### [Example 3]

Films each of 450 µm in thickness having a layer structure of PA/EVOH/PA/adhesive resin layer/heat-sealing resin layer (the thickness ratio of the respective layers = 15/10/15/10/50%) were prepared by T-die extrusion, i.e. melt extrusion through a multi-layer co-extrusion die. Each polyamide resin used in the films had a different blending ratio of A-Ny and 6-Ny, as shown in Table 1 of Example 1.

The resins used were as follows. With respect to PA, there were used, as A-Ny, SELAR PA 3426 manufactured by DuPont-Mitsui Polychemicals Co., Ltd. and, as the crystalline nylon to be blended with A-Ny, 1030B (which is 6-Ny) manufactured by Ube Industries, Ltd. As EVOH, there was used EVAL EP-F101 manufactured by KURARAY CO., LTD. As the adhesive resin (hereinafter abbreviated to Ad), there was used MELTHENE P2030W manufactured by TOSOH CORPORATION. As the heat-sealing resin (hereinafter abbreviated to HS), there was used HIMIRAN 1601S manufactured by DuPont-Mitsui Polychemicals Co., Ltd.

The multilayered films obtained above were subjected to successive biaxial stretching using a biaxial stretching tester manufactured by Toyo Seiki Seisaku-sho, Ltd. The stretching temperature was 90°C and the stretch ratio was 3 both lengthwise and crosswise. Each sample showed the same successive biaxial stretchability as shown in Table 1 of Example 1.

### [Example 4]

There were prepared a 375-µm film having a layer structure of PA/EVOH/PA/Ad/HS (the thickness ratio and material of each layer were the same as those of Run No. 4 of Example 3) and, for comparison, a 375-µm film having a layer structure of PA/EVOH/Ad/HS (the thickness ratio of the respective layers = 15/15/15/55%; the material of each layer was the same as that of Run No. 4 of Example 3). The two films were stretched by a successive biaxial stretcher at a stretching temperature of 90°C to a stretch ratio of 2.9 both lengthwise and crosswise.

The multilayered biaxially stretched films obtained above were evaluated for curl. As a result, the film of the present invention had substantially no curl and was flat while the comparative film showed a big curl.

### [Example 5]

There was prepared, by co-extrusion, a film (total thickness = 270 µm) having a layer structure of PA/Ad/EVOH/Ad/PA. The thickness ratio of the respective layers was 30/10/20/10/30 (%).

The resins used in the respective layers were as follows.
- PA:: a blend of A-Ny (SELAR PA 3426 manufactured by DuPont-Mitsui Polychemicals Co., Ltd.) and 6-Ny (1030B manufactured by Ube Industries, Ltd. (blending ratio = 10 : 90)
- EVOH:: EVAL EP-F101 manufactured by KURARAY CO., LTD.
- Ad:: an acid-modified linear low-density polyethylene (ADMER NF-300 manufactured by Mitsui Petrochemical Industries, Ltd.)

The film was subjected to successive biaxial stretching using a biaxial stretching tester manufactured by Toyo Seiki Seisaku-sho, Ltd. The stretching temperature was 80°C and the stretch ratio was 3 both lengthwise and crosswise, whereby a multilayered film having a total thickness of 30 µm was prepared.

The film was evaluated for anti-pinhole property by measuring the flex fatigue resistance by a Guerbot flex tester and the sticking strength at a pin curvature radius of 0.5 mm.

### [Example 6]

There was prepared, by co-extrusion, a film (total thickness = 540 µm) having a layer structure of PA/Ad/EVOH/PA/Ad/HS. The thickness ratio of the respective layers was 15/10/15/10/5/45 (%).

The resins used in the respective layers were as follows.
- PA:: a blend of A-Ny (SELAR PA 3426 manufactured by DuPont Mitsui Polychemicals Co., Ltd.) and 6-Ny (1030B manufactured by Ube Industries, Ltd. (blending ratio = 20 : 80)
- EVOH:: EVAL EP-F101 manufactured by KURARAY CO., LTD.
- Ad:: an acid-modified linear low-density polyethylene (ADMER NF-300 manufactured by Mitsui Petrochemical Industries, Ltd.)
- HS:: an ethylene-vinyl acetate copolymer (EVATATE D2011 manufactured by SUMITOMO CHEMICAL CO., LTD.)

The film was subjected to successive biaxial stretching using a biaxial stretching tester manufactured by Toyo Seiki Seisaku-sho, Ltd. The stretching temperature was 90°C and the stretch ratio was 3 both lengthwise and crosswise, whereby a multilayered film having a total thickness of 60 µm was prepared.

The film was evaluated for anti-pinhole property in the same manner as in Example 5.

### [Comparative Example 1]

A film (total thickness = 30 µm) having a layer structure of PA/EVOH was prepared by dry lamination. The thicknesses of the respective layers were 15 µm and 12 µm. Commercially available biaxially stretched films were used for the respective layers. The film was evaluated for anti-pinhole property in the same manner as in Example 5.

### [Comparative Example 2]

A film (total thickness = 60 µm) having a layer structure of PA/EVOH/EVA was prepared by dry lamination. The thicknesses of the respective layers were 15 µm, 12 µm and 30 µm. Commercially available biaxially stretched films were used for the PA layer and the EVOH layer. A commercially available unstretched film was used for the EVA layer. The film was evaluated for anti-pinhole property in the same manner as in Example 5.

The results of evaluation of anti-pinhole property in Examples 5 and 6 and Comparative Examples 1 and 2 are shown in Table 2. Flex fatigue resistance by Guerbot flex tester was measured by examining the number of pinholes appearing when flexed 1,000 times in an atmosphere of 25°C. Sticking strength was measured by applying a pin to the PA side of the film at a sticking speed of 500 mm/min in an atmosphere of 25°C.

In the films of the Examples, the numbers of pinholes appearing as a result of Guerbot flex were significantly smaller and the sticking strengths were higher than in the films of the Comparative Examples.

**Table 2**

| | Thickness (µm) | Guerbot Flex (number/1000 times) | Sticking strength (kgf) |
|---|---|---|---|
| Example 5 | 30 | 3 | 1.7 |
| Example 6 | 60 | 0 | 2.2 |
| Comparative Example 1 | 30 | 18 | 0.7 |
| Comparative Example 2 | 60 | 12 | 1.2 |

### [Example 7]

A film (total thickness = 235 µm) having a layer structure of PA/EVOH/PA was prepared by co-extrusion. The thickness ratio of the respective layers was 40/20/40 (%).

The resins used in the respective layers were as follows.
- PA:: a blend of A-Ny (SELAR PA 3426 manufactured by DuPont-Mitsui Polychemicals Co., Ltd.) and 6-Ny (1030B manufactured by Ube Industries, Ltd.) (blending ratio = 5:95)
- EVOH:: EVAL EP-E105 manufactured by KURARAY CO., LTD.

The film was subjected to successive biaxial stretching using a biaxial stretching tester manufactured by Toyo Seiki Seisaku-sho, Ltd. The stretching temperature was 80°C and the stretch ratio was 3 both lengthwise and crosswise, whereby a multilayered stratched film having a total thickness of 15 µm was prepared.

The film was measured for light transmittance (%) and cloudiness in accordance with ASTM D1003.

### [Example 8]

A film (total thickness = 400 µm) having a layer structure of PA/Ad/EVOH/PA/Ad/HS was prepared by co-extrusion. The thickness ratio of the respective layers was 15/10/15/10/5/45 (%).

The resins used in the respective layers were as follows.
- PA:: a blend of A-Ny (SELAR PA3426 manufactured by DuPont-Mitsui Polychemicals Co., Ltd.) and 6-Ny (1030B manufactured by Ube Industries, Ltd.) (blending ratio = 50 : 50)
- EVOH:: EVAL EP-F101 manufactured by KURARAY CO., LTD.
- Ad:: an acid-modified linear low-density polyethylene (MELTHENE P2030W manufactured by TOSOH CORPORATION)
- HS:: an ethylene-vinyl acetate copolymer (EVATATE D2011 manufactured by SUMITOMO CHEMICAL CO., LTD.)

The film was subjected to successive biaxial stretching using a biaxial stretching tester manufactured by Toyo Seiki Seisaku-sho, Ltd. The stretching temperature was 90°C and the stretch ratio was 4 both lengthwise and crosswise, whereby a multilayered stretched film having a total thickness of 25 µm was prepared.

The film was measured for light transmittance and cloudiness in accordance with ASTM D 1003.

### [Comparative Example 3]

A multilayered stretched film (total thickness = 15 µm) having a layer structure of PA/EVOH/PA was prepared in the same manner as in Example 7 except that only the PA used in Example 7 was changed to a different resin as shown below.
- PA:: a blend of MXD 6 nylon (a polycondensate of metaxylenediamine and adipic acid) (MX Nylon 6580 manufactured by MITSUBISHI GAS CHEMICAL CO., INC.) and 6-Ny (1024B manufactured by Ube Industries, Ltd.) (blending ratio = 5 : 95)

### [Comparative Example 4]

A multilayered stretched film (total thickness = 25 µm) having a layer structure of PA/Ad/EVOH/PA/Ad/HS was prepared in the same manner as in Example 8 except that only the PA used in Example 8 was changed to a different resin as shown below.
- PA:: a blend of MXD 6 nylon (MX Nylon 6580 manufactured by MITSUIBISHI GAS CHEMICAL CO., INC.) and 6-Ny (1030B manufactured by Ube Industries, Ltd.) (blending ratio = 50 : 50)

The film was measured for light transmittance and cloudiness. The results are shown in Table 3.

**Table 3**

| | Light transmittance (%) | Cloudiness (%) |
|---|---|---|
| Example 7 | 98 | 1.4 |
| Example 8 | 97 | 1.6 |
| Comparative Example 3 | 85 | 5.1 |
| Comparative Example 4 | 82 | 7.2 |

### INDUSTRIAL APPLICABILITY

The multilayered stretched film according to the present invention is excellent in successive biaxial stretchability as well as in properties such as anti-pinhole property, transparency, gas barrier property, heat sealability, mechanical strength and the like, and is suitable as a packaging film for foods and other goods or as a laminating material for packaging film.

## Claims

1. A multilayered stretched film wherein three layers are laminated in an order starting from an outermost layer, of a polyamide resin layer (A), a saponified ethylene-vinyl acetate copolymer resin layer (B) and the polyamide resin layer (A), and wherein the polyamide resin layer (A) consists of a blend of 5-70% by weight of an amorphous polyamide and 95-30% by weight of a crystalline polyamide.

2. A multilayered stretched film wherein five layers are laminated in an order starting from an outermost layer, of a polyamide resin layer (A), a modified polyolefin adhesive resin layer (C), a saponified ethylene-vinyl acetate copolymer resin layer (B), the modified polyolefin adhesive resin layer (C) and the polyamide resin layer (A), and wherein the polyamide resin layer (A) consists of a blend of 5-70% by weight of an amorphous polyamide and 95-30% by weight of a crystalline polyamide.

3. A multilayered stretched film comprising a polyamide resin layer (A), a saponified ethylene-vinyl acetate copolymer resin layer (B), a modified polyolefin adhesive resin layer (C) and a heat-sealing resin layer (D), wherein the polyamide resin layer (A) consists of a blend of 5-70% by weight of an amorphous polyamide and 95-30% by weight of a crystalline polyamide, and wherein five or six layers are laminated in an order starting from an outermost layer, of A-B-A-C-D or A-C-B-A-C-D.

4. A multilayered stretched film according to Claim 1, 2 or 3, which has been subjected to successive biaxial stretching at a stretching temperature of 50-150°C at a stretch ratio of 2-6 in one direction and of at least 5 in areal ratio.

5. A multilayered stretched film according to Claim 1, 2 or 3, which has been subjected to successive biaxial stretching at a stretching temperature of 50-150°C at a stretch ratio of 2-6 in one direction and of at least 5 in areal ratio and further to heat setting at a temperature of 5-100°C higher than the stretching temperature.
